(19) **Europäisches Patentamt**
**European Patent Office**
**Office européen des brevets**

(11) Veröffentlichungsnummer : **0 135 112**
**B1**

(12) # EUROPÄISCHE PATENTSCHRIFT

(45) Veröffentlichungstag der Patentschrift :
03.12.86

(51) Int. Cl.⁴ : **B 27 K  3/15**

(21) Anmeldenummer : **84109417.0**

(22) Anmeldetag : **08.08.84**

(54) **Wässriges Holzschutzmittel.**

(30) Priorität : **17.08.83 DE 3329694**

(43) Veröffentlichungstag der Anmeldung :
**27.03.85 Patentblatt 85/13**

(45) Bekanntmachung des Hinweises auf die Patenterteilung : **03.12.86 Patentblatt 86/49**

(84) Benannte Vertragsstaaten :
**AT BE CH DE FR GB IT LI NL SE**

(56) Entgegenhaltungen :
**EP-A- 0 009 546**
**EP-A- 0 043 901**
**EP-A- 0 075 814**
**EP-A- 0 083 709**
**EP-A- 0 092 655**
**Die Akte enthält technische Angaben, die nach dem Eingang der Anmeldung eingereicht wurden und die nicht in dieser Patentschrift enthalten sind.**

(73) Patentinhaber : **Dr. Wolman GmbH**
**Dr.-Wolman-Strasse 31-33**
**D-7573 Sinzheim (DE)**

(72) Erfinder : **Marx, Hans-Norbert**
**Mozartweg 8**
**D-7580 Buehl-Weitenung (DE)**
Erfinder : **Pommer, Ernst-Heinrich, Dr.**
**Berliner Platz 7**
**D-6703 Limburgerhof (DE)**

(74) Vertreter : **Schweiss, Werner, Dr. et al**
**Carl-Bosch-Strasse 38**
**D-6700 Ludwigshafen (DE)**

**Beschreibung**

Die vorliegende Erfindung betrifft ein wäßriges Holzschutzmittel auf der Grundlage einer wäßrigen Lösung eines oxidativ trocknenden, mit Säuren löslich gemachten, Aminogruppen tragenden niedermolekularen 1,3-Butadienpolymerisats, mit einem pH-Wert von 2 bis 6.

Es ist bekannt, wasserlösliche alkalische Bindemittel zusammen mit wasserunlöslichen Wirkstoffen in Wasser zu lösen und als Holzschutzmittel zu verwenden (DE-A-30 14 194). Diese wäßrigen Lösungen haben den Nachteil, daß sie bei einem pH-Wert von 8 bis 12 die Holzfaser stark anquellen. Durch diese Quellung wird das Eindringen der wäßrigen Lösung und damit des Wirkstoffs in das Holz behindert.

Es ist ferner bekannt, wäßrige Holzschutzmittel aus wasserlöslichen Wirkstoffen und oxidativ trocknenden, mit Säuren löslich gemachten, Aminogruppen tragenden niedermolekularen 1,3-Butadienpolymerisaten, die sich mit einem pH-Wert von 2 bis 6 in Wasser lösen, herzustellen (EP-B-9546).

Es wurde nun gefunden, daß wäßrige Holzschutzmittel auf der Grundlage einer wäßrigen Lösung eines oxidativ trocknenden, mit Säuren löslich gemachten, Aminogruppen tragenden niedermolekularen 1,3-Butadienpolymerisats, das bei einem pH-Wert von 2 bis 6 4-[3-(4-(n)-Butyl-dimethylsilyl-phenyl)-2-methyl-propyl]-cis-2,6-dimethyl-morpholin, 4-[3-(4-(t)-Butylphenyl)-2-methyl-propyl]-cis-2,6-dimethyl-morpholin oder 4-Tridecyl-2,6-dimethylmorpholin in gelöster Form enthält, das Eindringen des Wirkstoffs in das Holz nicht behindern.

Es ist überraschend, daß sich die Verbindung 4-[3-(4-(n)-butyl-dimethylsilyl-phenyl)-2-methyl-propyl]-cis-2,6-dimethylmorpholin und die anderen oben genannten Morpholinderivate in der wäßrigen Lösung des oxidativ trocknenden, mit Säuren löslich gemachten, Aminogruppen tragenden niedermolekularen 1,3-Butadienpolymerisats bei einem pH-Wert von 2 bis 6 in Wasser lösen, während sie in der bekannten wäßrigen Lösung eines neutralisierten Alkydharzes nicht oder nur wenig löslich sind.

Prinzipiell eignen sich zur Umsetzung mit den Aminogruppen des 1,3-Butadienpolymerisats alle organischen und anorganischen Säuren.

Vorzugsweise werden Säuren verwendet, die lagerstabile Formulierungen ergeben, z. B. Phenol-4-sulfonsäure, Toluolsulfonsäure sowie andere substituierte ein- oder mehrkernige aromatische Sulfon- oder Carbonsäuren, Amidosulfonsäure, Alkansäuren wie Ameisensäure, Essigsäure, anorganische Säuren, z. B. Salzsäure, Schwefelsäure, inklusive Kohlensäure.

Im Hinblick auf die Verbesserung der Wirksamkeit können auch saure Verbindungen, die selbst über eine Schutzwirkung verfügen, zur Umsetzung mit den Aminogruppen verwendet werden, z. B. Fluoroborsäure, Borsäure, Hexafluorokieselsäure, Flußsäure.

Die oben genannten wasserunlöslichen organischen Wirkstoffe behalten in der wäßrigen Lösung ihre bekannte gute Wirkung bei. Die neuen Holzschutzmittel enthalten beispielsweise, berechnet auf die fertige Mischung, in wäßriger Lösung 0,5 bis 5 Gew.%, insbesondere 1 bis 4 Gew.% eines wasserunlöslichen Wirkstoffs, und 3 bis 50 Gew.%, insbesondere 5 bis 20 Gewichtsprozent oxidativ trocknendes, mit Säuren löslich gemachtes, Aminogruppen tragendes niedermolekulares 1,3-Butadienpolymerisat, das sich mit einem pH-Wert von 2 bis 6 in Wasser löst.

Zur Verbesserung der Wirkung können die neuen Holzschutzmittel auch noch bekannte insektizide Wirkstoffe, z. B. chlorierte Kohlenwasserstoffe, Carbamate oder Phosphorsäureester enthalten. Von diesen Wirkstoffen wird das Gamma-hexachlorcyclohexan bevorzugt. Die neuen Holzschutzmittel enthalten beispielsweise 0,2 bis 2 Gewichtsprozent, insbesondere 0,3 bis 1 Gewichtsprozent an insektiziden Wirkstoffen.

Zur Verbesserung der fungiziden Wirkung können die neuen Holzschutzmittel auch noch zusätzlich bekannte wasserlösliche fungizide Wirkstoffe, z. B. Alkalisalze des N-Hydroxy-N-cyclohexyldiazeniumdioxids, beispielsweise in Mengen von 0 bis 2 Gewichtsprozent, insbesondere 0,3 bis 1 Gewichtsprozent enthalten. Die neuen Holzschutzmittel können auch noch oberflächenaktive Substanzen, z. B. Alkylenoxidadditionsprodukte, beispielsweise Ethylenoxid- oder Propylenoxidadditionsprodukte, insbesondere an Alkylphenole, beispielsweise in Mengen von 0 bis 5 Gewichtsprozent. Insbesondere 0,5 bis 3 Gewichtsprozent Alkylenoxidadditionsprodukt enthalten. Das Additionsprodukt von 8 bis 11 Mol Ethylenoxid an Nonylphenol wird bevorzugt.

Die neuen Holzschutzmittel können auch noch bekannte Trockenstoffe (Sikkative) (Römpp Chemie-Lexikon, 7. Auflage, Band 6, Seite 3692, 2693) beispielsweise in Mengen von 0 bis 3 Gewichtsprozent, insbesondere 1 bis 2 Gewichtsprozent enthalten. Eine Mischung der Oktoate von Kobalt, Mangan und Blei wird bevorzugt.

Die neuen Holzschutzmittel können auch noch bekannte feinteilige Pigmente (Römpp Chemie-Lexikon, 7. Auflage, Band 4, Seiten 2693, 2694, 2695) z. B. organische oder anorganische Pigmente, beispielsweise in Mengen von 0 bis 10 Gewichtsprozent, insbesondere 2 bis 5 Gew.% enthalten.

Die neuen Holzschutzmittel können auch noch organische Flüssigkeiten, z. B. Kohlenwasserstoffe oder Glykole, beispielsweise in Mengen von 0 bis 10 Gewichtsprozent, insbesondere 6 bis 8 Gewichtsprozent, enthalten. Bevorzugt werden eine Benzinfraktion mit Siedepunkt 180 bis 220 °C und Butylglykol.

Bei der Herstellung der erfindungsgemäßen Holzschutzmittel ist es z. B. möglich, eine 10 %ige (Gew.%) wäßrige Lösung des oxidativ trocknenden, mit Säuren löslich gemachten, Aminogruppen tragenden niedermolekularen 1,3-Butadienpolymerisats, das sich mit einem pH-Wert von 2 bis 6 in Wasser löst, ohne weitere Lösungsmittel mit 4-[3-(4-(n)-Butyl-dimethylsilyl-phenyl)-2-methyl-propyl]-cis-2,6-dimethylmorpholin in 100 %iger Form oder in Form einer 50 %igen Lösung in einem organischen Lösungsmittel zu versetzen. Dabei entstehen vollkommen homogene, klare bis leicht trübe Mischungen. Selbst bei langer Aufbewahrungszeit verändern sich derartige Mischungen nicht, d. h. der Wirkstoff scheidet sich aus dieser Mischung nicht ab.

Überraschenderweise ist eine derartige Mischung in der Lage, weitere bekannte, an sich wasserunlösliche, insbesondere organische, biologisch wirksame Substanzen aufzunehmen. So ist es z. B. möglich, die im Holzschutz üblichen Mengen von insektiziden Wirkstoffen, beispielsweise Hexachlorcyclohexan oder 1-Naphthyl-N-methylcarbamat in dieser Mischung aufzulösen, ohne zusätzliche organische Lösungsmittel zu verwenden.

Auch viele andere, im Holzschutz verwendbare bekannte Wirkstoffe aus der Reihe der Insektizide sowie der Fungizide mit Wirkung gegen holzzerstörende oder holzverfärbende Pilze können in dem erfindungsgemäßen Holzschutzmittel mitverwendet werden.

Das neue Holzschutzmittel dringt bei der Anwendung gleichmäßig in das Holz ein, ohne das Holz aufzuquellen. Man vermeidet so die Nachteile von alkalischen wäßrigen Lösungen.

Weiterhin ist es von Bedeutung, daß die neuen Holzschutzmittel unbrennbar und sehr geruchsarm sind. Je nach Konzentration des oxidativ trocknenden, mit Säuren löslich gemachten, Aminogruppen tragenden niedermolekularen 1,3-Butadienpolymerisats, das sich mit einem pH-Wert von 2 bis 6 in Wasser löst, im Holzschutzmittel erhält man bei steigender Konzentration Imprägniergrundierungen, offenporige Holzschutzlasuren und Dickschichtlasuren.

Die oxidativ trocknenden, mit Säuren löslich gemachten, Aminogruppen tragenden niedermolekularen 1,3-Butadienpolymerisate, die sich mit einem pH-Wert von 2 bis 6 in Wasser lösen, sind normalerweise in organischen Lösungsmitteln gelöst. Sie können in lösungsmittelfreier Form oder in Form ihrer Lösungen zur Herstellung der erfindungsgemäßen Holzschutzmittel verwendet werden.

Je nach Lieferform der verwendeten oxidativ trocknenden, mit Säuren löslich gemachten, Aminogruppen tragenden niedermolekularen 1,3-Butadienpolymerisate, die sich mit einem pH-Wert von 2 bis 6 in Wasser lösen, liegt dann der Gesamtgehalt des Holzschutzmittels an organischen Lösungsmitteln (vorzugsweise Glykolderivate) bei 3 bis 10 %.

Für die Versuche wurde ein oxidativ trocknendes, mit Säuren löslich gemachtes, Aminogruppen tragendes niedermolekulares 1,3-Butadienpolymerisat, das sich mit einem pH-Wert von 2 bis 6 in Wasser löst, verwendet, das wie folgt hergestellt worden war.

Man lagert Maleinsäureanhydrid an ein flüssiges cis-Polybutadien an und setzt das Addukt anschließend mit der äquivalenten Menge N,N-Dimethyl-1,3-propylendiamin um. Aus der Reaktionsfolge resultiert ein ungesättigtes, seitenständige N-(3-Dimethylaminopropyl)-bernsteinsäureamid-Gruppen tragendes Polymer, das als Poly-(butadien)-g-3-(1-(3-dimethylaminopropyl)-2,5-dioxo)-pyrrolidinyl zu bezeichnen ist. Solche Produkte sind bekannt aus EP-B-9546.

Die folgenden Rezepturbeispiele erläutern die Zusammensetzung der erfindungsgemäßen Holzschutzmittel.

1. Holzschutzgrundierung farblos mit vorbeugendem Schutz gegen holzzerstörende Pilze und Insekten

7 % oxidativ trocknendes, mit Säuren löslich gemachtes, Aminogruppen tragendes niedermolekulares 1,3-Butadienpolymerisat, das sich mit einem pH-Wert von 2 bis 6 in Wasser löst (BP),
1,5 bis 3 % 4-[3-(4-(n)-Butyl-dimethylsilyl-phenyl)-2-methyl-propyl]-cis-2,6-dimethylmorpholin
0,50 % Gamma-Hexachlorcyclohexan
2 % Nonylphenol + 8 bis 11 Mol Ethylenoxid
84,50 bis 81,50 % Wasser
3 % Butylglykol
1,5 bis 3 % Benzinfraktion 80 bis 220 °C.

2. Holzschutzlasur, pigmentiert, mit vorbeugendem Schutz gegen holzzerstörende Pilze und Insekten

20 % BP,
1 bis 2 % 4-[3-(4-(n)-Butyl-dimethylsilyl-phenyl)-2-methyl-propyl]-cis-2,6-dimethylmorpholin
0,50 % Gamma-Hexachlorcyclohexan
1 % Nonylphenol + 8 bis 11 Mol Ethylenoxid
2 bis 5 % Pigment oder Pigmentpräparation
1 bis 2 % Octoat von Co, Mn, Pb
68,50 bis 62,50 % Wasser
1 bis 2 % Benzinfraktion 80 bis 220 °C
5 % Butylglykol

3. Dickschichtlasur mit vorbeugendem Schutz gegen holzzerstörende Pilze und Insekten

28 % BP

1 bis 2 % 4-[3-(4-(n)-Butyl-dimethylsilyl-phenyl)-2-methyl-propyl]-cis-2,6-dimethylmorpholin

0,50 % Gamma-Hexachlorcyclohexan

1 % Nonylphenol + 8 bis 11 Mol Ethylenoxid

2 bis 5 % Pigment oder Pigmentpräparation

2 % Octoat von Co, Mn, Pb

52,50 bis 47,50 % Wasser

12 % Butylglykol

1 bis 2 % Benzinfraktion 80 bis 220 °C.

4. Imprägniergrund mit Schutzwirkung gegen holzzerstörende Pilze und Insekten sowie gegen holzverfärbende Pilze

10 % oxidativ trocknendes, Aminogruppen tragendes niedermolekulares 1,3-Butadienpolymerisat

4 % 4-Phenolsulfonsäure (für die Umsetzung mit den Aminogruppen)

2 % 4-[3-(4-(n)-Butyl-dimethylsilyl-phenyl)-2-methyl-propyl]-cis-2,6-dimethylmorpholin

1 % Carbendazim (Bläueschutz)

0,40 % Lindan (gamma-Hexachlorcyclohexan)

82,60 % Wasser

5. Imprägniergrund gegen holzzerstörende Pilze

5 % oxidativ trocknendes, Aminogruppen tragendes niedermolekulares 1,3-Butadienpolymerisat,

3 % Fluorborsäure

2 % 4-[3-(4-(n)-Butyl-dimethylsilyl-phenyl)-2-methyl-propyl]-cis-2,6-dimethylmorpholin

90 % Wasser

6. Grundierung mit Bläueschutzwirkung

10 % oxidativ trocknendes, Aminogruppen tragendes niedermolekulares 1,3-Butadienpolymerisat

4 % Amidosulfonsäure oder Borsäure (Neutralisationsmittel)

2 % 4-[3-(4-(n)-Butyl-dimethylsilyl-phenyl)-2-methyl-propyl]-cis-2,6-dimethylmorpholin

1 % Carbendazim

83 % Wasser

7. Tauchgrundierung

8 % oxidativ trocknendes, Aminogruppen tragendes niedermolekulares 1,3-Butadienpolymerisat

4 % Essigsäure

1 % 4-[3-(4-(n)-Butyl-dimethylsilyl-phenyl)-2-methyl-propyl]-cis-2,6-dimethylmorpholin

1 % Furmecyclox

0,50 % TBTO

5 % Butylglykol

1 % Netzmittel (Addukt von Nonylphenol + 8 bis 11 Mol Ethylenoxid)

79, 50 % Wasser

8. Tauchgrundierung

8,00 % BP

4,00 % Essigsäure

1,00 % 4-[3-(4-(n)-Butyl-dimethylsilyl-phenyl)-2-methyl-propyl]-cis-2,6-dimethylmorpholin

1,00 % 1-[2-(2,4-Dichlorphenyl)-1,3-dioxolon-2-yl-methyl]-1H-1,2,3-triazol (Azaconazol)

0,50 % TBTO

5,00 % Butylglykol

1,00 % Netzmittel (Addukt von Nonylphenol + 8 bis 11 Mol Ethylenoxid)

79,50 % Wasser

9. Tauchgrundierung

8,00 % BP

4,00 % Essigsäure

1,00 % 4-[3-(4-(n)-Butyl-dimethylsilyl-phenyl)-2-methyl-propyl]-cis-2,6-dimethylmorpholin

1,00 % Tridemorph

0,50 % TBTO

5,00 % Butylglykol

4

1,00 % Netzmittel (Addukt von Nonylphenol + 8 bis 11 Mol Ethylenoxid)
79,50 % Wasser

10. Tauchgrundierung

8,00 % BP
4,00 % Essigsäure
1,00 % 4-[3-(4-(n)-Butyl-dimethylsilyl-phenyl)-2-methyl-propyl]-cis-2,6-dimethylmorpholin
1,00 % Fenpropimorph
0,50 % TBTO
5,00 % Butylglykol
1,00 % Netzmittel (Addukt von Nonylphenol + 8 bis 11 Mol Ethylenoxid)
79,50 % Wasser

Die folgenden Mischungen erläutern zusätzlich die mit den erfindungsgemäßen Mischungen verbundenen Vorteile.

(A$_1$)
7 % BP
1,5 bis 3 % 4-[3-(4-(n)-Butyl-dimethylsilyl-phenyl)-2-methyl-propyl]-cis-2,6-dimethylmorpholin
2 % Addukt von Nonylphenol + 8 bis 11 Mol Ethylenoxid
3 % Butylglykol
1,5 % Benzinfraktion (Siedebereich 80 bis 220 °C)
Wasserzusatz bis 100 %

(B$_1$)
1,5 bis 3 % 4-[3-(4-(n)-Butyl-dimethylsilyl-phenyl)-2-methyl-propyl]-cis-2,6-dimethylmorpholin
2 % Addukt von Nonylphenol + 8 bis 11 Mol Ethylenoxid
3 % Butylglykol
1,5 % Benzinfraktion (Siedebereich 80 bis 220 °C)
Wasserzusatz (pH-Wert 2 bis 6) bis 100 %

(C$_1$)
7 % BP
1,5 bis 3 % 4-[3-(4-(n)-Butyl-dimethylsilyl-phenyl)-2-methyl-propyl]-cis-2,6-dimethylmorpholin
2 % Addukt von Nonylphenol + 8 bis 11 Mole Ethyloxid
Wasserzusatz bis 100 %

(D$_1$)
1,5 bis 3 % 4-[3-(4-(n)-Butyl-dimethylsilyl-phenyl)-2-methyl-propyl]-cis-2,6-dimethylmorpholin
2 % Addukt von Nonylphenol + 8 bis 11 Mol Ethylenoxid
Wasserzusatz (pH-Wert 2 bis 6) bis 100 %

(E$_1$)
7 % PB
1,5 bis 3 % 4-[3-(4-(n)-Butyl-dimethylsilyl-phenyl)-2-methyl-propyl]-cis-2,6-dimethylmorpholin
Wasserzusatz bis 100 %

(A$_2$)
8 % BP
1 % 4-[3-(4-(t)-Butylphenyl)-2-methyl-propyl]-cis-2,6-dimethylmorpholin
1 % Addukt von Nonylphenol + 8 bis 11 Mol Ethylenoxid
4 % Butylglykol
1 % Benzinfraktion (Siedebereich 80 bis 220 °C)
Wasserzusatz bis 100 %

(B$_2$)
1 % 4-[3-(4-(t)-Butylphenyl)-2-methyl-propyl]-cis-2,6-dimethylmorpholin
1 % Addukt von Nonylphenol + 8 bis 11 Mol Ethylenoxid
4 % Butylglykol
1 % Benzinfraktion (Siedebereich 80 bis 220 °C)
Wasserzusatz (pH-Wert 2 bis 6) bis 100 %

(C$_2$)
8 % BP

5

**0 135 112**

1 % 4-[3-(4-(t)-Butylphenyl)-2-methyl-propyl]-cis-2,6-dimethylmorpholin
1 % Addukt von Nonylphenol + 8 bis 11 Mol Ethylenoxid
Wasserzusatz bis 100 %

(D₂)
1 % 4-[3-(4-(t)-Butylphenyl)-2-methyl-propyl]-cis-2,6-dimethylmorpholin
1 % Addukt von Nonylphenol + 8 bis 11 Mol Ethylenoxid
Wasserzusatz (pH-Wert 2 bis 6) bis 100 %

(E₂)
8 % BP
1 % 4-[3-(4-(t)-Butylphenyl)-2-methyl-propyl]-cis-2,6-dimethylmorpholin
Wasserzusatz bis 100 %.

Die Prüfung der Mischungen zeigt, daß die Mischungen A₁, C₁, E₁, A₂, C₂ und E₂ klare, wäßrige, stabile Lösungen sind, die sich beim Aufbewahren über längere Zeit nicht verändern. Die Mischungen sind als Holzschutzmittel gut geeignet. Die fungiziden Wirkstoffe zeigen ihre volle fungizide Wirkung. Die Mischungen B₁, D₁, B₂ und D₂ dagegen sind Zweiphasenmischungen, die eine wäßrige Phase und den festen Wirkstoff enthalten, der sich als Bodensatz absetzt. Diese Mischungen sind als Holzschutzmittel ungeeignet, weil der feste Wirkstoff nicht in das Holz eindringt, sondern in Form eines festen Belages auf der Holzoberfläche liegenbleibt und von dort abfällt oder durch Regen abgewaschen oder durch Wind weggeblasen wird.

Die siliciumorganischen Wirkstoffe, z. B. der Wirkstoff 4-[3-(4-(n)-Butyldimethylsilyl-phenyl)-2-methyl-propyl]-cis-2,6-dimethylmorpholin können wie folgt hergestellt werden. Die angegebenen Teile sind Gewichtsteile.

10,0 Teile 2-Methyl-3-(4-bromphenyl)-propylchlorid wurden in 80 Teilen THF (Tetrahydrofuran) vorgelegt. Bei — 75 bis — 70 °C wurden dann 2,55 Teile n-Butyllithium (gelöst in Pentan) zugetropft, man rührte 30 min bei — 50 °C nach und tropfte bei dieser Temperatur 6,6 Teile n-Butyldimethylchlorsilan zu. Nach 30 min Nachrühren bei — 50 °C ließ man das Reaktionsgemisch auf Raumtemperatur erwärmen und rührte 12 Stunden nach.

Nach dem Filtrieren und Abdestillieren des Lösungsmittels wurde der Rückstand destilliert. Bei dem Sdp. 96 bis 100 °C 0,08 mbar wurden 9,8 Teile 2-Methyl-3-(4-n-butyldimethylsilyl-phenyl)-propylchlorid erhalten, $n_D^{22}$ = 1,503 3.

Das so erhaltene Propylchlorid wird mit cis-2,6-Dimethylmorpholin umgesetzt entsprechend der folgenden Umsetzung.

13,5 Teile 2-Methyl-3-(4-triethylsilylphenyl)-propylchlorid und 16,5 Teile cis-2,6-Dimethylmorpholin wurden zusammengegeben und 6 Stunden bei 150 °C gerührt. Nach dem Abkühlen wurde die Mischung mit gesättigter Na₂CO₃-Lösung etwa auf pH = 9 gestellt. Man extrahierte mit Methylenchlorid, trocknete die organische Phase und engte ein. Bei der Destillation bei 110 bis 114 °C/0,01 Torr erhielt man 12,6 Teile 4-[3-(4-Triethylsilylphenyl)-2-methylpropyl]-cis-2,6-dimethylmorpholin, $n_D^{23}$ = 1,502 5.

Die Verbindung 4-[3-(4-(n)-Butyl-dimethylsilyl-phenyl)-2-methyl-propyl]-cis-2,6-dimethylmorpholin hat $n_D^{23}$ = 1,495 0.

Die erfindungsgemäßen Holzschutzmittel werden in üblicher Weise, beispielsweise durch Streichen, Tauchen oder Besprühen des Holzes angewendet. Sie schützen das mit ihnen behandelte Holz zuverlässig gegen Zerstörung oder Verfärbung durch Pilze oder Insekten. Die im Einzelfall anzuwendenden Mengen an Holzschutzmittel richten sich nach ihrem Wirkstoffgehalt und sind so auszuwählen, daß die auf das Holz einwirkende Menge an Holzschutzmittel die Menge an Wirkstoff enthält, die der üblichen Anwendungsmenge des Wirkstoffs entspricht.

Die erfindungsgemäßen wäßrigen Holzschutzmittel werden beispielsweise hergestellt, indem 3 bis 50 %, vorzugsweise 5 bis 20 % des 1,3-Butadienpolymerisats in Wasser vorgelegt werden und mit einer Menge an Säure versetzt, so daß der sich einstellende pH-Wert 2 bis 6, vorzugsweise 3 bis 4 beträgt.

In dieser Lösung, der zur Verminderung der Anfangsviskosität geringe Mengen an Lösungsmittel und/oder Netzmittel (insbesondere Glykolderivate und nicht-ionische Ethylenoxidaddukte) beigegeben werden können, werden die Wirkstoffe gelöst. Anschließend wird gegebenenfalls weiteres Wasser zugegeben.

Die so hergestellten Formulierungen sind lagerstabil und nach Aufbringen auf das Holz und oxidativer Trocknung wasserunlöslich.

Die Vorteile der erfindungsgemäßen Mittel liegen in der Einphasigkeit, die einer Separation der Wirkstoffe an der Holzoberfläche entgegenwirkt und in der sauren Einstellung, die eine Quellung des Holzes verhindert. Die gelösten Wirkstoffe können ohne Behinderung in das Holz einziehen, so daß mit Hilfe dieser Mittel bessere Eindringtiefen und umfassenderer Holzschutz als mit üblichen Mitteln erzielt werden können.

Der Verzicht auf Lösungsmittel, ganz oder teilweise, gestattet die gefahrlose und umweltentlastende Verwendung der Mittel.

Versuch

Fungizide Wirksamkeit gegenüber holzzerstörenden Pilzen nach einer 12 Wochen langen Verdunstungsbeanspruchung

Zur Ermittlung der fungiziden Wirksamkeit gegenüber den holzzerstörenden Pilzen Coniophora puteana und Polystictus versicolor wurden in Anlehnung an die DIN-Vorschrift 52 176, Blatt 1 « Prüfung von Holzschutzmitteln, Mykologische Kurzprüfung (Klötzchenverfahren) ». Kiefernsplintholzklötzchen (für Coniophora) und Buchenholzklötzchen (für Polystictus) mit den Abmessungen 50 × 25 × 15 mm mit jeweils 100 g/m² Holzoberfläche der Mischung des Rezepturbeispiels 4 bestrichen. Zur Verschärfung der Prüfbedingungen wurden die Klötzchen nach dreiwöchiger Lagerung in einem Windkanal einer zwölfwöchigen Verdunstungsbeanspruchung unterworfen ; hierbei betrug die Lufttemperatur 40 °C ± 2 °C und die Strömungsgeschwindigkeit der Luft 1 m/s ± 0,1 m/s. Danach wurden die behandelten Klötzchen zusammen mit den unbehandelten in Glasschalen gelegt, die als Prüfpilz Coniophora puteana bzw. Polystictus versicolor auf einem Nähragar enthielten. Die Schalen wurden anschließend in einem Klimaraum bei einer Temperatur von 22 °C und einer relativen Luftfeuchte von 70 % bebrütet. Nach dreimonatiger Versuchsdauer wurden die Klötzchen von anhaftendem Pilzmyzel befreit und getrocknet. Anschließend wurde das Ausmaß der Holzzerstörung festgestellt.

Bewertungsschema :
1 unversehrt
2a stellenweise wenig angegriffen
2b im ganzen wenig angegriffen
3a stellenweise stark angegriffen
3b im ganzen stark angegriffen
4a stellenweise völlig zerstört
4b im ganzen völlig zerstört

Ausmaß des Pilzangriffs sowie des Gewichtsverlustes der Klötzchen nach dreimonatiger Versuchsdauer und vorausgegangener Verdunstungsbeanspruch

| Behandlung | Coniophora puteana | | Polystictus versicolor | |
|---|---|---|---|---|
| | visuelle Beurteilung | ...% Gewichtsverlust | visuelle Beurteilung | ...% Gewichtsverlust |
| 100 g/m² Rezepturbeispiel 4 | 1 | 0 | 1 | 0 |
| Kontrolle (unbehandelt) | 3a/3b | 20,7 | 3b | 24,9 |

Bei Verwendung eines öligen Holzschutzmittels mit 2 % (Gew.%) Wirkstoff 4-[3-(4-(n)-Butyl-dimethylsilyl-phenyl)-2-methyl-propyl]-cis-2,6-dimethylmorpholin (2 Gewichtsteile Wirkstoff wurden unter leichtem Erwärmen in 55 Teilen einer aromatenreichen Benzinfraktion gelöst ; anschließend wurden 10 Teile eines Alkydharzes zugefügt und bei Raumtemperatur mit Testbenzin auf 100 Teile aufgefüllt) erhielt man unter gleichen Prüfbedingungen wie oben beschrieben schlechte Ergebnisse. Sie werden auf geringe Wirkstoffpenetration in das Holz zurückgeführt :

| | Coniophora puteana | Polystictus versicolor |
|---|---|---|
| visuelle Beurteilung | 2b/3a | 2b |
| ..% Gewichtsverlust | 8,8 | 10,3 |

**Patentansprüche**

1. Wäßriges Holzschutzmittel auf der Grundlage einer wäßrigen Lösung eines oxidativ trocknenden, mit Säuren löslich gemachten, Aminogruppen tragenden niedermolekularen 1.3-Butadienpolymerisats mit einem pH-Wert von 2-6, dadurch gekennzeichnet, daß es 4-[3-(4-(n)-Butyl-dimethylsilyl-phenyl)-2-methyl-propyl]-cis-2,6-dimethylmorpholin, 4-[3-(4-(t)-Butylphenyl-2-methyl-propyl]-cis-2,6-dimethylmorpholin oder 4-Tridecyl-2,6-dimethylmorpholin in gelöster Form enthält.

2. Verfahren zum Schutz von Holz, dadurch gekennzeichnet, daß man das Holz mit einem Mittel gemäß Anspruch 1 behandelt.

3. Verfahren zur Bekämpfung von holzschädigenden Pilzen und Insekten, dadurch gekennzeichnet, daß man das zu schützende Holz mit einem Mittel gemäß Anspruch 1 behandelt.

4. Verfahren zur Herstellung eines wäßrigen Holzschutzmittels durch Lösung eines oxidativ trocknenden, mit Säuren löslich gemachten, Aminogruppen tragenden niedermolekularen 1,3-Butadienpolymerisats bei einem pH-Wert von 2 bis 6 in Wasser, dadurch gekennzeichnet, daß man in der wäßrigen Lösung 4-[3-(4-(n)-Butyl-dimethylsilylphenyl)-2-methylpropyl]-cis-2,6-dimethylmorpholin, 4-[3-(4-(t)-Butylphenyl)-2-methylpropyl]-cis-2,6-dimethylmorpholin oder 4-Tridecyl-2,6-dimethylmorpholin löst.

## Claims

1. An aqueous wood preservative based on an aqueous solution of an amino-containing low molecular weight 1,3-butadiene polymer which dries oxidatively and has been rendered soluble with an acid, and having a pH of from 2 to 6, characterized in that it contains 4-[3-(4-n-butyldimethylsilylphenyl)-2-methylpropyl]-cis-2,6-dimethylmorpholine, 4-[3-(4-t-butylphenyl)-2-methylpropyl]-cis-2,6-dimethylmorpholine or 4-tridecyl-2,6-dimethylmorpholine in dissolved form.

2. A process for protecting wood, characterized in that the wood is treated with an agent as claimed in claim 1.

3. A process for combatting wood-destroying fungi and insects, characterized in that the wood to be protected is treated with an agent as claimed in claim 1.

4. A process for preparing an aqueous wood preservative by dissolving an amino-containing low molecular weight 1,3-butadiene polymer which dries oxidatively and has been rendered soluble with an acid, in water at a pH of from 2 to 6, characterized in that 4-[3-(4-n-butyldimethylsilylphenyl)-2-methylpropyl]-cis-2,6-dimethylmorpholine, 4-[3-(4-t-butylphenyl)-2-methylpropyl]-cis-2,6-dimethylmorpholine or 4-tridecyl-2,6-dimethylmorpholine is dissolved in the aqueous solution.

## Revendications

1. Agent aqueux de protection du bois à base d'une solution aqueuse d'un polymérisat de 1,3-butadiène, à bas poids moléculaire, d'un pH de 2-6, portant des groupes amino, rendu soluble par des acides et desséchant par oxydation, caractérisé par le fait qu'il contient, sous forme dissoute, de la 4-[3-(4-(n)-butyldiméthylsilyl-phényl)-2-méthyl-propyl]-cis-2,6-diméthylmorpholine, 4-[3-(4-(t)-butylphényl)-2-méthyl-propyl]-cis-2,6-diméthylmorpholine ou 4-tridécyl-2,6-diméthylmorpholine.

2. Procédé pour la protection du bois, caractérisé par le fait que l'on traite le bois avec un agent selon la revendication 1.

3. Procédé de lutte contre les champignons et insectes nuisibles au bois, caractérisé par le fait que l'on traite le bois à protéger avec un agent selon la revendication 1.

4. Procédé de préparation d'un agent aqueux de protection du bois, par dissolution dans l'eau d'un polymérisat de 1,3-butadiène, à bas poids moléculaire, d'un pH de 2-6, caractérisé par le fait que l'on dissout dans la solution aqueuse de la 4-[3-(4-(n)-butyldiméthylsilyl-phényl)-2-méthyl-propyl]-cis-2,6-diméthylmorpholine, 4-[3-(4-(t)-butylphényl)-2-méthyl-propyl]-cis-2,6-diméthylmorpholine ou 4-tridécyl-2,6-diméthylmorpholine.